# EUROPEAN PATENT SPECIFICATION

(11) **EP 3 492 342 B1**
(45) Date of publication and mention of the grant of the patent: **28.07.2021**
(21) Application number: 18209319.5
(22) Date of filing: 29.11.2018
(51) Int. Cl.: B62D 1/184, B62D 1/19

(54) **STEERING COLUMN ASSEMBLY**
LENKSÄULENANORDNUNG
ENSEMBLE DE COLONNE DE DIRECTION

(30) Priority: 01.12.2017 EP 17461638; 22.01.2018 GB 201801000
(43) Date of publication of application: 05.06.2019
(73) Proprietor: ZF Steering Systems Poland Sp. Z o.o., 43-502 Czechowice-Dziedzice (PL)
(72) Inventor: WOJTALIK, Artur, 40-719 Katowice (PL); PONIKIEWSKI, Pawel, 34-331 Pewel Mala (PL)
(74) Representative: Barker Brettell LLP

(56) References cited:
- EP-A1- 1 538 064
- CN-U- 203 544 097
- DE-A1-102004 007 554
- KR-A- 20160 139 160
- US-A1- 2017 313 344

## Description

This invention relates to improvements in steering column assemblies, and to a mounting bracket for use in a steering column assembly.

It is known to provide a steering column assembly for an automotive vehicle that can be adjustable for rake and in many cases also for reach. This requires the column shroud, within which the steering column shaft attached to the steering wheel is rotatably located, to be fixed to the vehicle by a clamp mechanism that can be locked and unlocked to either prevent or permit adjustment of the column shroud position respectively.

One common arrangement uses a telescopic column shroud, which comprises an upper shroud portion and a lower shroud portion. Each portion comprises a tube with one tube, usually the upper shroud portion that is nearest the steering wheel, to slide over or into the other to permit reach adjustment. A fixing rail welded to the upper tube is secured to a support bracket by the releasable clamp mechanism. Rake adjustment can be achieved by providing a mounting bracket that includes generally vertically extending slots through which the clamp mechanism passes. The clamp mechanism, which is secured to the fixing rail, can be moved vertically within these slots, taking the column with it to adjust rake. If reach adjustment is also needed, this can be simply achieved by providing generally horizontal slots in the fixing rail that the clamp mechanism passes through.

A known arrangement for use in restricted spaces utilises a bracket in the form of an inverted U-shape having two arms, depending from a main body, which have the vertical slots formed therein. The clamp mechanism includes a bolt which passes through the slots to link the arms together and the column is located between the arms. Clamping of the clamp mechanism draws the arms together to squeeze them onto the fixing rail.

It is desirable for the steering column assembly to collapse during a crash where a driver is thrown forward onto the steering assembly. The driver may impact the steering wheel directly, which applies a high axial load along the steering shaft, or may impact an inflated airbag fitted to the steering wheel. To reduce potential trauma to the driver, it is desirable for the steering column assembly to collapse telescopically in a controlled manner.

It is known to enable a controlled collapse by securing the mounting bracket to the vehicle using one or more frangible connectors. When a high load is applied to the steering column upper shroud portion, this is transferred to the mounting bracket, which will break the frangible connectors. The mounting bracket and upper shroud portion may then move together to provide the required collapse. In the case where a positive lock is provided between the mounting bracket and the shroud using racks of teeth, the ability for the mounting bracket to break free of the vehicle body is essential for allowing collapse in a crash.

An object of the present invention is to ameliorate shortcomings in the steering assemblies of the above kind, in particular relating to the behaviour during a crash.

DE 10 2004 007554 A1 discloses the preamble of the independent claims and shows a steering column assembly with a bracket and two legs. In order to allow easy tensioning, the legs have different stiffnesses. The bracket includes struts down its length.

KR 2016 0139160 A discloses a tilt structure for a steering column. The mounting bracket includes stiffening ribs in the form of a half circle.

CN 203 544 097 U discloses a steering column assembly. The assembly includes a bracket having legs depending therefrom. The legs are braced against the bracket using struts.

EP 1 538 064 A1 discloses a steering column assembly including a bracket. The bracket includes struts to increase stiffness.

According to a first aspect, there is provided a steering column assembly comprising: a steering column shroud, which surrounds a steering shaft for a steering wheel; a mounting bracket, which is fixed in position relative to a part of vehicle; and a clamp mechanism, which is movable between a clamped position in which the clamp mechanism fixes the steering column shroud in position relative to the mounting bracket and a released position in which the clamp mechanism permits movement of the shroud relative to the mounting bracket; in which the mounting bracket comprises a main body portion with two bracket arms depending from and extending away from the main body portion to form a U shape, the arms embracing a portion of the column shroud, and in which the clamp mechanism when in the clamped position squeezes the two arms together thereby clamping the steering column shroud in position; characterised in that the mounting bracket is provided with one or more stiffening ribs in areas where the highest forces are carried by the mounting bracket in the event of a crash where a load is applied axially to the steering column shroud, wherein one stiffening rib extends diagonally across the main body portion of the mounting bracket at an angle of between 10 degrees and 40 degrees of a line normal to the main axis of the steering shaft.

One of the arms may be fixed to the shroud by a positive lock mechanism when the clamp mechanism is clamped and the other may be fixed to the shroud using friction only such that, in the event of a crash where a load is applied axially to the steering column shroud, the forces carried by the two arms are unequal and the forces applied to the main body are asymmetrical, the one or more stiffening ribs being arranged in an asymmetrical pattern determined by the distribution of the forces.

The positive lock mechanism may comprise at least one rack of teeth provided on the arm that engages a corresponding rack of teeth of the clamp mechanism, when the clamp mechanism is in the clamped position.

The mounting bracket may comprise at least one plate which is bent to form the mounting bracket, and each stiffening rib may comprise a region of the plate that is bent out of the plane of the plate to form either an elongate bulge or elongate indentation in the plate. This may be formed by pressing or stamping or rolling or otherwise manipulating the plate to deform it permanently out of its initial plane.

The or each plate may comprise a steel plate or other metal or metal alloy.

Each stiffening rib may comprise an embossed region of the plate, which stands out from a surrounding region. This provides a region which has a relatively higher resistance to bending compared with the same region if it was not embossed.

The end nearest the bracket arm that has a positive lock may be located closer to the steering wheel end of the steering column assembly with the other end of the stiffening rib further away from the steering wheel end of the steering column assembly.

One stiffening rib may extend across the main body from one side to the other at a normal to the main axis of the steering shaft.

The mounting bracket may further comprise a pair of wings, each extending horizontally away from the centre line of the main body portion, each wing terminating with a horn that extends in a direction that is substantially parallel to the main axis of the steering shaft.

The mounting bracket may comprise two plates, one deformed to provide a lower layer of the main body portion and the two arms, and the other deformed to define an upper layer of the main body portion and the two wings.

Stiffening ribs may be provided in each plate.

Where the two plates overlap to form the main body, a stiffening rib may be provided in one plate that is in register with a corresponding rib of complimentary shape in the other plate. For example, one of the stiffening ribs may be seated within a corresponding rib of complementary shape.

Each wing may be fixed to a rigid portion of a vehicle body when in use, such as a cross beam, by a respective frangible connector arranged such that, in the event of a crash where the frangible connector breaks, the mounting bracket will move relative to the rigid portion of the vehicle with each horn sliding along a part of a respective frangible connector. The horns therefore act as guides to control the path along which the mounting bracket moves.

Each horn may therefore comprise a guide surface along one edge which fits within a guide slot defined in a portion of the frangible connector that remains secured to a fixed portion of the vehicle, in the event that the frangible connectors break.

Stiffening ribs may be provided in the wings, the arms, and in the horns.

The stiffening ribs may be provided in a pattern that optimises, or partially optimises, the resistance of the bracket to bending when subjected to designed loading during a crash which leads to a telescopic collapse of the steering column assembly. This pattern may place stiffening ribs in regions that carry high forces, with no ribs provided in areas that carry little or no crash forces.

The main body portion of the mounting bracket may be located above a portion of the column assembly, as is the clamp mechanism. Thus, the base may be located horizontally above the portion of the steering column with the arms depending vertically downwards such that the U-shape is inverted.

The clamp mechanism may include a clamp bolt that connects one arm of the mounting bracket to the other arm. The bolt may comprise a shaft which may be provided with a nut or bolt head at one end with the shaft and bolt head/nut passing cleanly through an opening (such as a hole or slit) in each of the leaves.

The clamp assembly may be arranged such that, when the clamp is in the unlocked position, the rake of the steering column can be adjusted whilst the inner and outer members remain fixed relative to one another. This is known as a single adjust mechanism.

The upper shroud portion or lower shroud portion, or the fixing rail secured to one of the portions, may be provided with one or more slits in the region fixed by the clamp mechanism such that the action of locking the clamp closes the slits and so deforming the outer member so that it grips the inner member. It may grip it directly or indirectly, e.g. through an intermediate member. The intermediate member may be chosen so as to provide a require friction between the inner and outer members.

The upper shroud portion and the lower shroud portion may each be substantially tubular, with the outer member having at least one elongate slit along its length at least in the region clamped by the clamping mechanism whereby the effective diameter of the outer member is reduced upon clamping to grip the inner member.

According to a second aspect the invention provides a mounting bracket which, in use, is fixed in position relative to a part of vehicle, the mounting bracket comprising a main body portion with two bracket arms depending from and extending away from the main body portion to form a U-shape, the arms embracing a portion of a column shroud, characterised in that the mounting bracket is provided with one or more stiffening ribs in areas where the highest forces are carried by the bracket in the event of a crash where a load is applied axially to the steering column shroud, wherein one stiffening rib extends diagonally across the main body portion of the mounting bracket at an angle of between 10 degrees and 40 degrees of a line normal to the main axis of a steering shaft.

The or each stiffening rib may comprise an embossed portion of the mounting bracket.

There will now be described, by way of example only, one embodiment of the present invention with reference to and as illustrated in the accompanying drawings, of which:
**Figure 1** is a view from the side of an embodiment of a steering assembly in accordance with the present invention;
**Figure 2** is a view from above of the mounting bracket and clamp mechanism of the assembly of Figure 1;
**Figure 3** is a perspective view of the mounting bracket removed from the rest of the steering assembly for clarity;
**Figure 4** is a view of the mounting bracket from above showing the path of force through the bracket during a crash;
**Figure 5** shows the steering column assembly viewed from above with the clamp mechanism in a clamped position before a crash
**Figure 6** shows the steering column assembly viewed in perspective with the clamp mechanism in a clamped position before a crash
**Figure 7** shows the steering column assembly viewed from above with the clamp mechanism in a clamped position a short time after a crash as the steering column is part way through a crash stroke;
**Figure 8** shows the steering column assembly viewed in perspective for the moment in time shown in Figure 7;
**Figure 9** shows the steering column assembly viewed from above with the clamp mechanism in a clamped position at the end of the crash stroke;
**Figure 10** shows the steering column assembly viewed in perspective with the clamp mechanism at the end of the crash stroke corresponding to Figure 9; and
**Figure 11** shows the inner leaf attached to the mounting bracket.

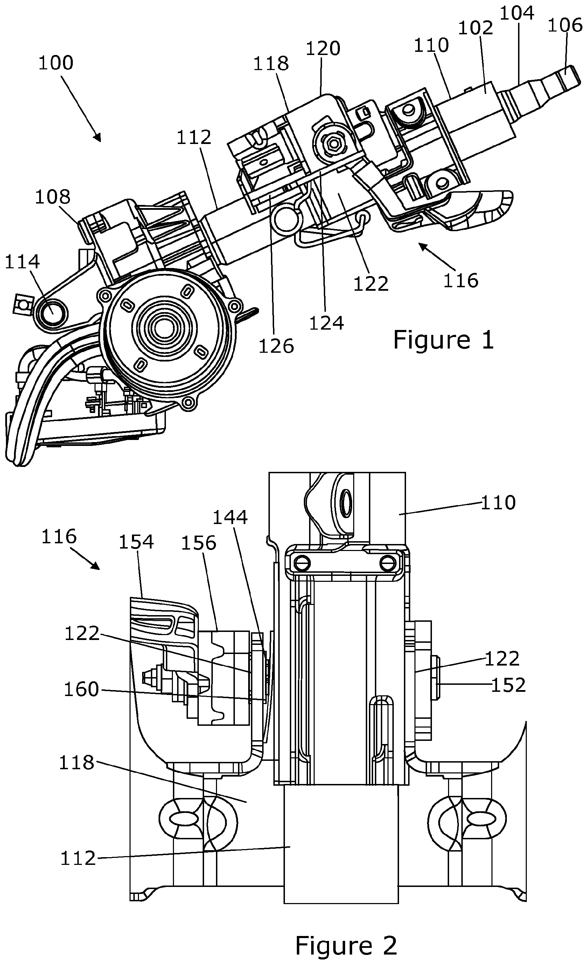

As shown in Figure 1, a steering column assembly 100 comprises a telescopic shroud 102, which supports a steering shaft 104. The end of the steering shaft 104, which can be seen protruding from the shroud 102, is provided with splines 106 that enable the shaft 104 to engage a steering wheel of a vehicle. The other end, not shown, engages a gearbox located within a housing 108.

The shroud 102 as shown is a two part telescopic shroud having an upper shroud portion 110 nearest the steering wheel (not shown) and a lower shroud portion 112 nearest the gearbox. The two shroud portions 110, 112 are tubular, and the end of the upper shroud portion 110 furthest from the steering wheel is a sliding fit around an end portion of the lower shroud portion 112. In other arrangements the upper shroud portion may slide into the lower shroud portion.

To support the shroud 102 in a correct position for a desired reach of the steering wheel, the relative position of the upper shroud portion 110 and lower shroud portion 112, and their positions relative to a rigid datum on the vehicle, such as a cross beam member, must also be fixed. Further, in the event of a crash, the upper shroud portion 110 must be able to move telescopically relative to the lower shroud portion 112 in a controlled manner.

To secure the shroud 102 in place, the lower shroud portion 112 is connected to a housing 108 for a gearbox which in turn is fixed to the vehicle body through a pivot 114. A clamp mechanism 116 is provided which can be moved between a released position, in which the upper and lower shroud portions 110, 112 are free to move axially, and a clamped position, in which they are prevented from moving during normal use by the clamp mechanism 116.

Specifically, the shroud 102 is fixed to a mounting bracket 118 by a releasable clamp mechanism 116. This mounting bracket 118 is in turn secured to a fixed part of the vehicle, such as the vehicle cross beam. The mounting bracket 118 comprises a main body portion 120 at the top of the mounting bracket 118, with two mounting bracket arms 122 depending from the main body 120 to form a U-shape when viewed in cross section. On each side of the main body 120 is a wing 124 that extends away from the centre line of the main body 120 and terminates in a pair of horns 126 that extend orthogonally away in a direction parallel to the axis of the shroud 102.

As shown, the mounting bracket 118 comprises two metal sheets that are pressed or otherwise deformed so that one forms a lower layer 128 of the main body portion 120 and the two arms 122, whilst the other plate forms an upper layer 130 of the main body 120 and both the wings 124 and horns 126. The two layers 128, 130 of the main body 120 are fixed together to form a laminate, in this example by welding.

The mounting bracket 118 is fixed to the cross beam, or to a support bracket fixed to the cross beam, by a respective frangible connector 132. Each connector 132 comprises a body portion 134 with a guide slot 136 on one edge that locates an edge of a respective horn 126 of the mounting bracket 118. The body portion 134 is secured to the vehicle cross beam, or support bracket, by a bolt that passes through a hole 138 in the body portion 134. A frangible pin 140 passes through both the body portion 134 and a hole 142 in the mounting bracket horn 126. During normal use, the frangible pin 140 prevents the mounting bracket 118 moving relative to the cross beam.

The releasable clamp mechanism 116 is shown in Figure 2. It comprises a clamp pin 144 that passes through elongate slots 146 in the two arms 122 that depend from the main body portion 120 of the mounting bracket 118. The arms 122 extend down opposing sides of a rail 148 that is formed on an upper surface of the upper shroud portion 110, and the clamp pin 144 also passes through two elongate slots 150 in the rail. One end of the clamp pin 144 is provided with a fixed head 152 that is too large to be drawn through at least the slot 146 in the adjacent arm 122 of the mounting bracket 118. The other end carries a lever 154, and a cam mechanism 156 between the lever 154 and the adjacent arm 122 of the mounting bracket 118. The turning of the lever 154 increases the length of the cam mechanism 156 along the axis of the clamp pin 144 when the clamp mechanism 116 is clamped, and shortens the length along the axis of the clamp pin 144 when the clamp mechanism 116 is released. When at the longest length, the clamp mechanism 116 squeezes the sides of the rail 148 together. This in turn closes up a slot, not shown, that extends axially along the upper shroud portion 110, which is also the outer shroud portion, causing the upper shroud portion 110 to clamp onto the lower shroud portion 112, which is also the inner shroud portion. When at the shortest length, the pressure is released.

To permit rake adjustment, the slot 146 in the arms 122 extends along an arc of fixed radius, the axis of the arc lying on the pivot axis of the pivot 114. The clamp pin 144 can move up and down along this slot 146 for rake adjustment. To permit reach adjustment, the slots 150 in the rail 148 extend along a line parallel to the axis of the shroud 102.

When the clamp mechanism 116 is closed, the fixed head 152 of the clamp pin 144 is pulled onto the outer face of the adjacent arm 122 of the mounting bracket 118. The cam mechanism 156, on the other hand, does not press directly onto the adjacent arm 122. Instead, it passes through the slot146 in the arm 122 to then pass through a narrower slot 158 in an inner leaf 160 that lies between the arm 122 and the rail 148. This can be seen clearly in Figure 2 of the drawings. The mounting arms 122 in this embodiment are therefore relatively rigid to give little deflection, with the inner leaf 160 providing the required flexibility needed during clamping.

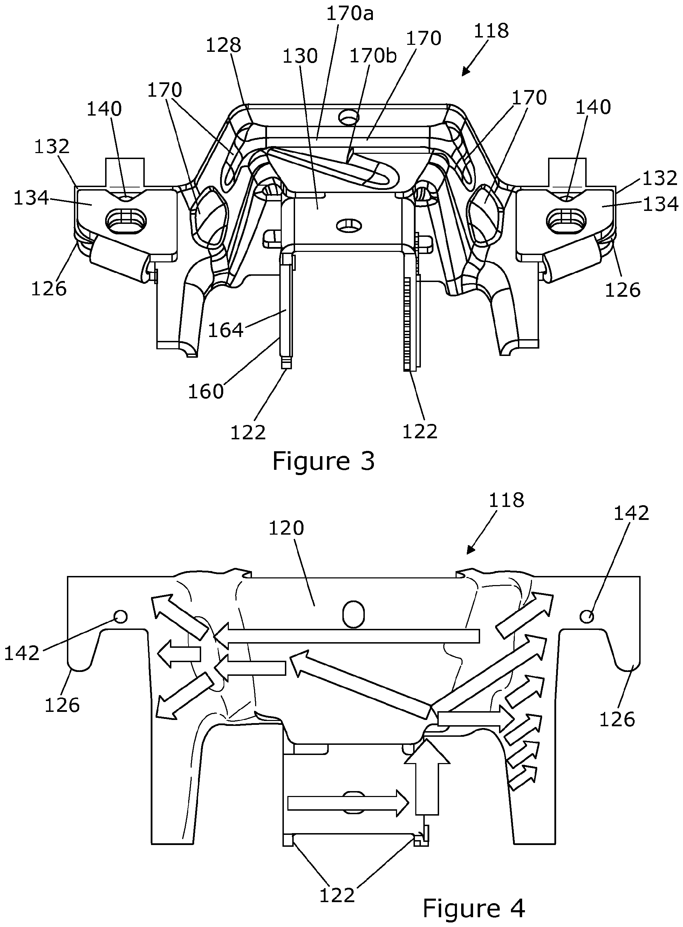

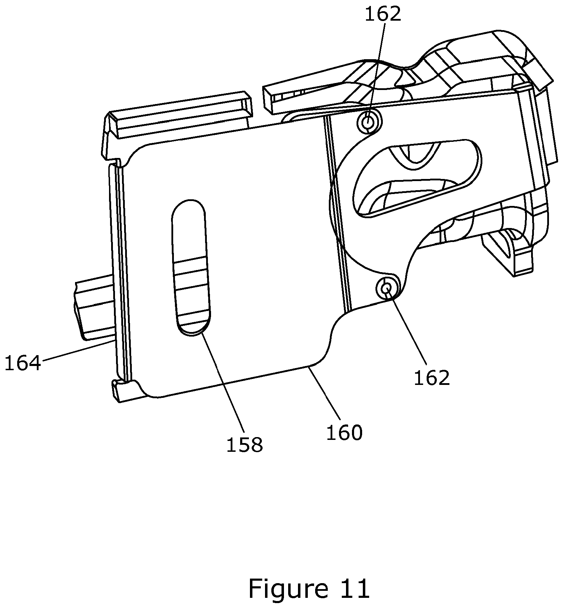

The inner leaf 160 can be seen in Figures 3 and 4 of the drawings. The leaf 160 is secured to an arm 122 of the mounting bracket 118 by two spot welds 162, shown in Figure 11, that lie along an arc that is offset from the arc of the slot 146 but shares the same centre axis. The leaf 160 is not connected at any other point, and so as the cam 156 moves to its longest length the inner leaf 160 deflects in the manner of a leaf spring, bending about the line that passes through the two spot welds 162. These spot welds 162 lie on the side of the slot 146 furthest from the steering wheel. Also shown is a hooked end part 164 of the leaf 160 that passes around the side edge of the arm 122. This helps to prevent the leaf 160 being sheared from the arm 122 of the mounting bracket 118 if a high side load is applied to the leaf 160 by the clamp pin 144..

To provide a positive lock of the steering column assembly 100 for reach and rake, a rack of teeth 166 is provided along each of the sides of the slot 146 in the mounting arm 122 nearest the fixed head 152 and along the side of the slot 150 in the adjacent rail 148. A pair of toothed blocks 168 are fitted to the clamp pin 144 that are pulled into engagement with these respective slots 146, 150 by the fixed head 152 when the clamp mechanism 116 is clamped, and are held free of the racks of teeth 166 when the clamp mechanism 116 is released.

The presence of the toothed racks 166 and blocks 168 on one side only of the mounting bracket 118 means that, in a crash where a high force is applied to the steering column shroud 102 along the axis of the shroud 102, this force will primarily pass through only one arm 122 of the mounting bracket 118 into the upper part of the bracket 118 and onward across the main body portion 120 and the wings 124 into the cross beam of the vehicle.

During normal use the forces on the bracket 118 are insufficient to break the frangible pins 140. The clamp mechanism 116 therefore clamps the shroud 102 securely in place onto the mounting bracket 118, which is in turn prevented from moving relative to the cross beam. The clamp mechanism 116 can be moved to the released position to enable the reach and rake of the steering column assembly 100 to be adjusted.

In the event of a crash where a large axial force is applied to the steering column upper shroud portion 110, this will apply a force through the mounting bracket arms 122 onto the frangible pins 140. Because only one arm 122 has a positive lock, more force will pass along that arm 122 and across the main body portion 120 of the mounting bracket 118 asymmetrically. This force will cause the pins 140 to break allowing the mounting bracket 118 to break free of the cross beam or support bracket. Once this occurs, only friction between the two shroud portions 110, 112 is present and this can be overcome by the high axial force. The upper shroud portion 110 will then move together with the mounting bracket 118 that remains positively locked to the upper shroud portion 110.

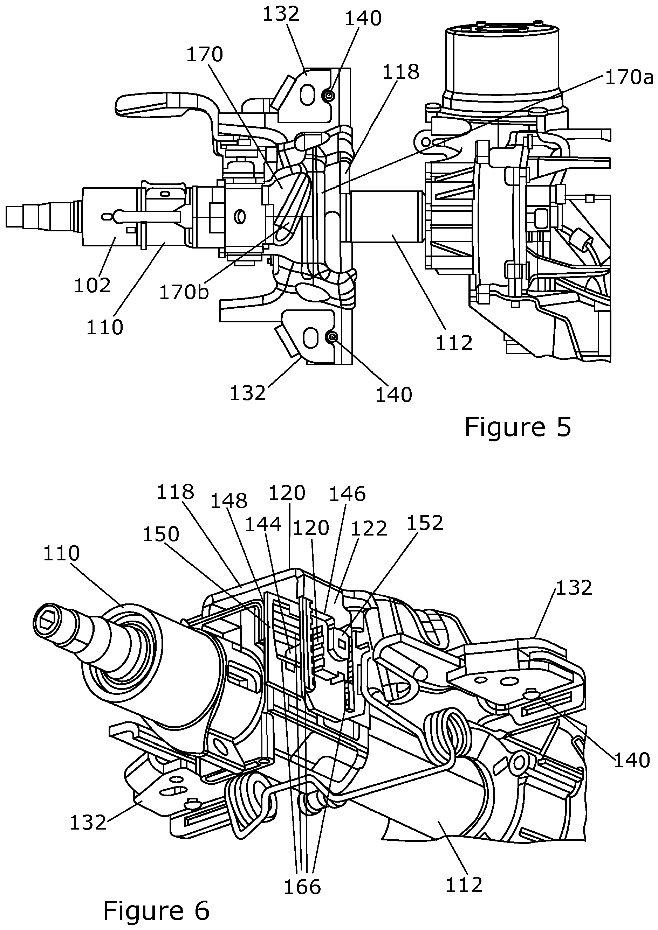

During this collapse movement in a crash, the body portion 134 of each capsule 132 will slide along the respective horns 126 of the bracket 118. The movement of the mounting bracket 118 is therefore carefully controlled. The sequence of movement of the mounting bracket 118 relative to the frangible capsules 132 is shown in Figures 5 to 10 of the drawings.

The relatively large distance between the two frangible connectors 132 and the fact that the forces applied to the mounting bracket 118 are highest on the mounting bracket arm 122 with the teeth 166 will result in a high, asymmetric, force passing through the mounting bracket 118 to the frangible connectors 132. This may, if not allowed for, lead to bending of the mounting bracket 118 which may impeded the ability of the plates to slide over the horns 126.

To prevent unwanted bending, the main body 120 of the mounting bracket 118 and the bracket arms 122 are provided with stiffening ribs 170. These ribs 170 comprise regions of the plates that have been embossed or deformed out of the plane of the surrounding plate by stamping or pressing or rolling or some other process. In particular, the main bracket 118 includes a first stiffening rib 170a that extends across the main body 120 in a direction normal to the main axis of the steering shaft 104. A second rib 170b is provided that is at an acute angle to the first rib 170a, with the end nearest the arm 122 with the teeth 166 being closer to the steering wheel and the other end of the rib170b further away from the steering wheel. The applicant has determined that this aligns the ribs 170 with the paths along which the greatest forces are generated in the bracket 118 during a crash. This allows a bracket 118 to provide a high resistance to bending for a relatively thin gauge of plate.

Stiffening ribs 170 are also provided in the arms, and in the regions where the horns 126 meet the wings 124.

As shown in Figures 5 to 10, the collapse stroke proceeds in controlled manner upon application of a large force to the steering column assembly 100. Figures 5 and 6 firstly show the steering column assembly 100 prior to the application of the force, and therefore the shroud 102 is held stationary relative to the frangible capsules 132 and support bracket (not shown) by the mounting bracket 118.

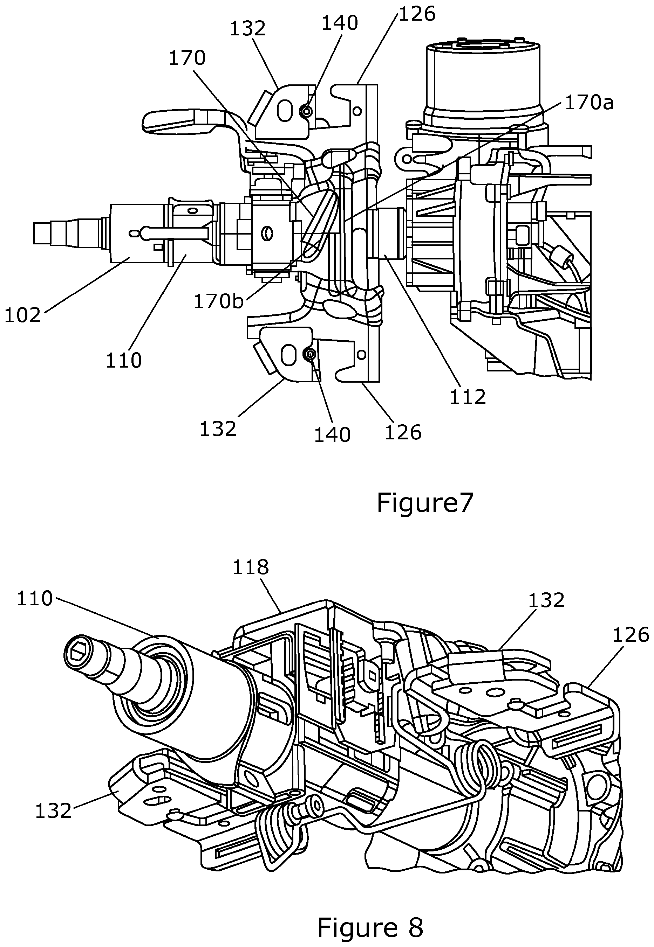

Figures 7 and 8 show the steering column assembly 100 a short time after application of a large force. As can be seen, the frangible pins 140 that hold the body 134 of the frangible connector 132 in position relative to the mounting bracket 118 have fractured. Thus, the mounting bracket 118 is able to move relative to the frangible connectors 132, which remain connected to the support bracket (not shown). The horns 126 remain within the guide slot 136 of the frangible connector 132 and therefore the mounting bracket 118 and connected shroud 102 begin to move in a controlled manner relative to the support bracket, guided by the guide slot 136.

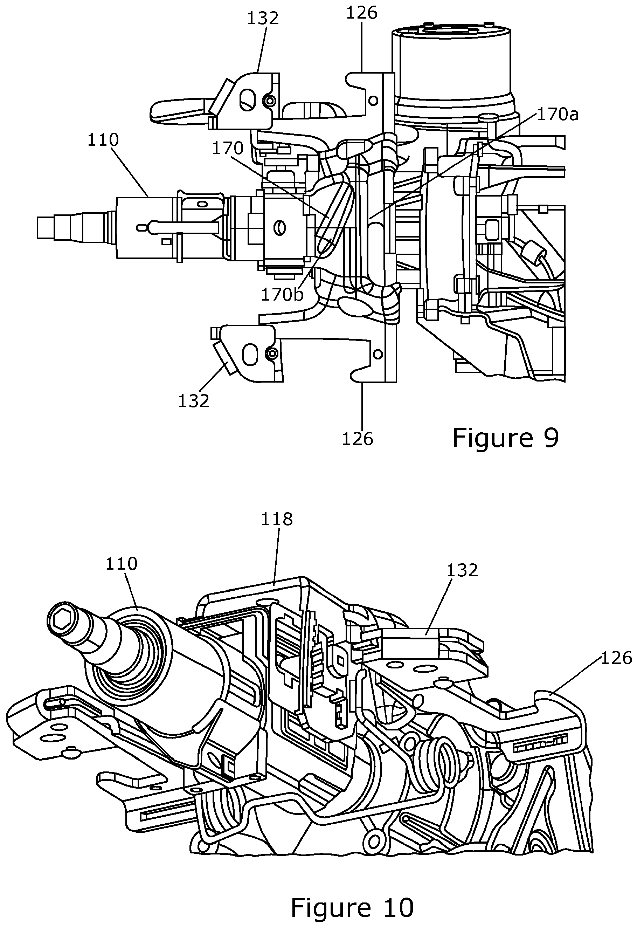

The steering column assembly 100 is shown in a fully-collapsed position in Figures 9 and 10. In the present embodiment, it can be seen that the horns 126 of the mounting bracket 118, even in this state, are still partially held within the guiding slot 136 of the frangible connector 132. In other embodiments, the horns 126 may not, at this point, be guided by the guiding slot 136. The shroud 102 has moved to its maximum position of collapse relative to the support bracket and frangible connectors 132.

## Claims

1. A steering column assembly (100) comprising:
a steering column shroud (102), which surrounds a steering shaft (104) for a steering wheel;
a mounting bracket (118), which is fixed in position relative to a part of vehicle; and
a clamp mechanism (116), which is movable between a clamped position in which the clamp mechanism (116) fixes the steering column shroud (102) in position relative to the mounting bracket (118) and a released position in which the clamp mechanism (116) permits movement of the shroud (102) relative to the mounting bracket (118);
in which the mounting bracket (118) comprises a main body portion (120) with two bracket arms (122) depending from and extending away from the main body portion (120) to form a U shape, the arms (122) embracing a portion of the steering column shroud (102), and in which the clamp mechanism (116) when in the clamped position squeezes the two arms (122) together thereby clamping the steering column shroud (102) in position;
**characterised in that** the mounting bracket (118) is provided with one or more stiffening ribs (170) in areas where the highest forces are carried by the mounting bracket (118) in the event of a crash where a load is applied axially to the steering column shroud (102), wherein one stiffening rib (170) extends diagonally across the main body portion (120) of the mounting bracket (118) at an angle of between 10 degrees and 40 degrees of a line normal to the main axis of the steering shaft (104).

2. A steering column assembly (100) according to claim 1, wherein one of the arms (122) is fixed to the steering column shroud (102) by a positive lock mechanism when the clamp mechanism (116) is clamped and the other is fixed to the steering column shroud (102) using friction only such that, in the event of a crash where a load is applied axially to the steering column shroud (102), the forces carried by the two arms (122) are unequal and the forces applied to the main body are asymmetrical, the one or more stiffening ribs (170) being arranged in an asymmetrical pattern determined by the distribution of the forces, optionally wherein the positive lock mechanism comprises at least one rack of teeth (166) provided on the arm (122) that engages a corresponding rack of teeth (166) of the clamp mechanism (116), when the clamp mechanism (116) is in the clamped position.

3. A steering column assembly (100) according to any preceding claim, wherein the mounting bracket (118) comprises at least one plate, which is bent to form the mounting bracket (118), and each stiffening rib (170) comprises a region of the plate that is bent out of the plane of the plate to form either an elongate bulge or elongate indentation in the plate, optionally wherein the at least one plate is formed by pressing or stamping or rolling or otherwise manipulating the plate to deform it permanently out of its initial plane, further optionally wherein the or each plate comprises a steel plate or other metal or metal alloy, further optionally wherein each stiffening rib (170) comprises an embossed region of the plate, which stands out from a surrounding region.

4. A steering column assembly (100) according to any preceding claim, wherein one stiffening rib (170) extends across the main body portion (120) from one side to the other at a line normal to the main axis of the steering shaft (104).

5. A steering column assembly (100) according to any preceding claim, wherein the mounting bracket (118) further comprises a pair of wings (124), each extending horizontally away from the centre line of the main body portion (120), each wing (124) terminating with a horn (126) that extends in a direction that is substantially parallel to the main axis of the steering shaft (104), optionally wherein each wing (124) is fixed to a rigid portion of a vehicle body when in use, such as a cross beam, by a respective frangible connector (132) arranged such that, in the event of a crash where the frangible connector (132) breaks, the mounting bracket (118) will move relative to the rigid portion of the vehicle with each horn (126) sliding along a part of a respective frangible connector (132), further optionally wherein each horn (126) comprises a guide surface along one edge which fits within a guide slot (136) defined in a portion of the frangible connector (132) that remains secured to a fixed portion of the vehicle, in the event that the frangible connectors (132) break.

6. A steering column assembly (100) according to any preceding claim, wherein the mounting bracket (118) comprises two plates, one deformed to provide a lower layer of the main body portion (120) and the two arms (122), and the other deformed to define an upper later of the main body portion (120) and the two wings (124), optionally wherein stiffening ribs (170) are provided in each plate, further optionally wherein, where the two plates overlap to form the main body portion (120), a stiffening rib (170) is provided in one plate that is in register with a corresponding rib (170) of complimentary shape in the other plate.

7. A steering column assembly (100) according to any preceding claim, wherein stiffening ribs (170) are provided in the wings, the arms (122), and in the horns.

8. A steering column assembly (100) according to any preceding claim, wherein the stiffening ribs (170) are provided in a pattern that optimises, or partially optimises, the resistance of the mounting bracket (118) to bending when subjected to designed loading during a crash which leads to a telescopic collapse of the steering column assembly (100).

9. A steering column assembly (100) according to any preceding claim, wherein the main body portion (120) of the mounting bracket (118) is located above a portion of the steering column assembly (100), optionally wherein the clamp mechanism (116) is also located above the portion of the steering column assembly (100).

10. A steering column assembly (100) according to any preceding claim, wherein the clamp mechanism (116) includes a clamp bolt (144) that connects one arm (122) of the mounting bracket (118) to the other arm (122), optionally wherein the clamp bolt (144) comprises a shaft, further optionally wherein the shaft is provided with a nut or bolt head (152) at one end with the shaft and nut or bolt head (152) passing cleanly through an opening in each of the leaves.

11. A steering column assembly (100) according to any preceding claim, wherein the clamp mechanism (116) is arranged such that, when the clamp mechanism (116) is in the unlocked position, the rake of the steering column assembly (100) can be adjusted whilst the inner and outer members remain fixed relative to one another.

12. A steering column assembly (100) according to any preceding claim, wherein an upper shroud portion (110) or a fixing rail (148) secured to one of the portions, is provided with one or more slits in the region fixed by the clamp mechanism (116) such that the action of locking the clamp mechanism (116) closes the slits and so deforming the outer member so that it grips the inner member.

13. A steering column assembly (100) according to any preceding claim, wherein the upper shroud portion (110) and a lower shroud portion (112) are substantially tubular, with the outer member having at least one elongate slit along its length at least in the region clamped by the clamp mechanism (116) whereby the effective diameter of the outer member is reduced upon clamping to grip the inner member.

14. A mounting bracket (118) which, in use, is fixed in position relative to a part of vehicle, the mounting bracket (118) comprising a main body portion (120) with two bracket arms (122) depending from and extending away from the main body portion (120) to form a U-shape, the arms (122) embracing a portion of a steering column shroud (102),
**characterised in that** the mounting bracket (118) is provided with one or more stiffening ribs (170) in areas where the highest forces are carried by the bracket in the event of a crash where a load is applied axially to the steering column shroud (102), wherein one stiffening rib (170) extends diagonally across the main body portion (120) of the mounting bracket (118) at an angle of between 10 degrees and 40 degrees of a line normal to the main axis of a steering shaft (104).

## Patentansprüche

1. Lenksäulenanordnung (100), umfassend:
eine Lenksäulenverkleidung (102), die eine Lenkwelle (104) für ein Lenkrad umgibt;
einen Befestigungshalter (118), der in seiner Position bezüglich eines Teils des Fahrzeugs befestigt ist; und
einen Klemmmechanismus (116), der zwischen einer festgeklemmten Position, in der der Klemmmechanismus (116) die Lenksäulenverkleidung (102) in ihrer Position bezüglich des Befestigungshalters (118) befestigt, und
einer freigegebenen Position, in der der Klemmmechanismus (116) eine Bewegung der Verkleidung (102) bezüglich des Befestigungshalters (118) gestattet, beweglich ist;
wobei der Befestigungshalter (118) einen Hauptkörperteil (120) mit zwei Halterungsarmen (122), die nach unten hängen und sich von dem Hauptkörperteil (120) weg erstrecken, um eine U-Form zu bilden, umfasst, wobei die Arme (122) einen Teil der Lenksäulenverkleidung (102) umgreifen, und wobei der Klemmmechanismus (116), wenn er sich in der festgeklemmten Position befindet, die beiden Arme (122) zusammendrückt und dadurch die Lenksäulenverkleidung (102) in ihrer Position festklemmt;
**dadurch gekennzeichnet, dass** der Befestigungshalter (118) in Bereichen, in denen im Falle eines Zusammenstoßes, bei dem eine Last axial an die Lenksäulenverkleidung (102) angelegt wird, die größten Kräfte von dem Befestigungshalter (118) getragen werden, mit einer oder mehreren Versteifungsrippen (170) versehen ist, wobei sich eine Versteifungsrippe (170) in einem Winkel von zwischen 10 Grad und 40 Grad einer normal zu der Hauptachse der Lenkwelle (104) verlaufenden Linie diagonal über den Hauptkörperteil (120) des Befestigungshalters (118) erstreckt.

2. Lenksäulenanordnung (100) nach Anspruch 1, wobei einer der Arme (122) durch einen formschlüssigen Verriegelungsmechanismus an der Lenksäulenverkleidung (102) befestigt sind, wenn der Klemmmechanismus (116) festgeklemmt ist, und der andere nur unter Verwendung von Reibung an der Lenksäulenverkleidung (102) befestigt ist, so dass im Falle eines Zusammenstoßes, bei dem eine Last axial an die Lenksäulenverkleidung (102) angelegt wird, die von den beiden Armen (122) getragenen Kräfte ungleich sind und die an den Hauptkörper angelegten Kräfte asymmetrisch sind, wobei die eine oder die mehreren Versteifungsrippen (170) in einem asymmetrischen Muster angeordnet sind, das durch die Verteilung der Kräfte angeordnet ist, wahlweise wobei der formschlüssige Verriegelungsmechanismus mindestens eine Zahnstange (166) umfasst, die an dem Arm (122) vorgesehen ist und eine entsprechende Zahnstange (166) des Klemmmechanismus (116) in Eingriff nimmt, wenn sich der Klemmmechanismus (116) in der festgeklemmten Position befindet.

3. Lenksäulenanordnung (100) nach einem vorhergehenden Anspruch, wobei der Befestigungshalter (118) mindestens eine Platte umfasst, die zur Bildung des Befestigungshalters (118) gebogen ist, und jede Versteifungsrippe (170) einen Bereich der Platte umfasst, der zur Bildung entweder einer länglichen Ausbauchung oder einer länglichen Vertiefung in der Platte aus der Ebene der Platte gebogen ist, wahlweise wobei die mindestens eine Platte durch Pressen oder Stanzen oder Walzen oder sonstige Verarbeitung der Platte, um sie dauerhaft aus ihrer Ausgangsebene zu verformen, gebildet ist, ferner wahlweise wobei die oder jede Platte eine Stahlplatte oder ein anderes Metall oder eine andere Metalllegierung umfasst, ferner wahlweise, wobei jede Versteifungsrippe (170) einen geprägten Bereich der Platte umfasst, der von einem umgebenden Bereich hervorsteht.

4. Lenksäulenanordnung (100) nach einem vorhergehenden Anspruch, wobei sich eine Versteifungsrippe (170) über den Hauptkörperteil (120) von einer Seite zur anderen an einer normal zu der Hauptachse der Lenkwelle (104) verlaufenden Linie erstreckt.

5. Lenksäulenanordnung (100) nach einem vorhergehenden Anspruch, wobei der Befestigungshalter (118) ferner ein Paar Flügel (124) umfasst, die sich jeweils horizontal von der Mittellinie des Hauptkörperteils (120) weg erstrecken, wobei jeder Flügel (124) mit einem Horn (126) endet, das sich in einer Richtung erstreckt, die im Wesentlichen parallel zu der Hauptachse der Lenkwelle (104) verläuft, wahlweise wobei jeder Flügel (124) im Gebrauch durch einen jeweiligen zerbrechlichen Verbinder (132) an einem starren Teil einer Fahrzeugkarosserie, wie zum Beispiel einem Querträger, befestigt ist, wobei der Verbinder so angeordnet ist, dass sich im Falle eines Zusammenstoßes, bei dem der zerbrechliche Verbinder (132) zerbricht, der Befestigungshalter (118) bezüglich des starren Teils des Fahrzeugs bewegt, wobei jedes Horn (126) entlang einem Teil des jeweiligen zerbrechlichen Verbinders (132) gleitet, ferner wahlweise wobei jedes Horn (126) eine Führungsfläche entlang einem Rand umfasst, die in einen Führungsschlitz (136) passt, der in einem Teil des zerbrechlichen Verbinders (132) definiert ist, der in dem Fall, dass die zerbrechlichen Verbinder (132) zerbrechen, an einem befestigten Teil des Fahrzeugs fixiert bleibt.

6. Lenksäulenanordnung (100) nach einem vorhergehenden Anspruch, wobei der Befestigungshalter (118) zwei Platten umfasst, wobei eine dahingehend verformt ist, eine untere Lage des Hauptkörperteils (120) und der beiden Arme (122) zu bilden, und die andere dahingehend verformt ist, eine obere Lage des Hauptkörperteils (120) und der beiden Flügel (124) zu bilden, wahlweise wobei die Versteifungsrippen (170) in jeder Platte vorgesehen sind, ferner wahlweise wobei, wo sich die beiden Platten zur Bildung des Hauptkörperteils (120) überlappen, eine Versteifungsrippe (170) in einer Platte vorgesehen ist, die mit einer entsprechenden Rippe (170) mit einer komplementären Form in der anderen Platte in Deckung ist.

7. Lenksäulenanordnung (100) nach einem vorhergehenden Anspruch, wobei Versteifungsrippen (170) in den Flügeln, den Armen (122) und in den Hörnern vorgesehen sind.

8. Lenksäulenanordnung (100) nach einem vorhergehenden Anspruch, wobei die Versteifungsrippen (170) in einem Muster vorgesehen ist, das den Widerstand des Befestigungshalters (118) gegen Biegen, wenn er während eines Zusammenstoßes mit einer designierten Belastung beaufschlagt wird, die zu einem teleskopischen Zusammenschieben der Lenksäulenanordnung (100) führt, optimiert oder teilweise optimiert.

9. Lenksäulenanordnung (100) nach einem vorhergehenden Anspruch, wobei sich der Hauptkörperteil (120) des Befestigungshalters (118) über einem Teil der Lenksäulenanordnung (100) befindet, wahlweise wobei sich der Klemmmechanismus (116) auch über dem Teil der Lenksäulenanordnung (100) befindet.

10. Lenksäulenanordnung (100) nach einem vorhergehenden Anspruch, wobei der Klemmmechanismus (116) eine Klemmschraube (144) beinhaltet, die einen Arm (122) des Befestigungshalters (118) mit dem anderen Arm (122) verbindet, wahlweise wobei die Klemmschraube (144) einen Schaft umfasst, ferner wahlweise wobei der Schaft mit einer Mutter oder einem Schraubenkopf (152) an einem Ende versehen ist, wobei der Schaft und die Mutter oder der Schraubenkopf (152) glatt durch eine Öffnung in den Blättern passieren.

11. Lenksäulenanordnung (100) nach einem vorhergehenden Anspruch, wobei der Klemmmechanismus (116) so angeordnet ist, dass, wenn sich der Klemmmechanismus (116) in der entriegelten Position befindet, die Neigung der Lenksäulenanordnung (100) eingestellt werden kann, während das innere und äußere Glied bezüglich einander befestigt bleiben.

12. Lenksäulenanordnung (100) nach einem vorhergehenden Anspruch, wobei ein oberer Verkleidungsteil (110) oder eine Befestigungsschiene (148), die an einem der Teile fixiert ist, mit einem oder mehreren Schlitzen in dem Bereich versehen ist, der durch den Klemmmechanismus (116) befestigt ist, so dass die Wirkung des Verriegelns des Klemmmechanismus (116) die Schlitze schließt und so das äußere Glied verformt, so dass es das innere Glied ergreift.

13. Lenksäulenanordnung (100) nach einem vorhergehenden Anspruch, wobei der obere Verkleidungsteil (110) und ein unterer Verkleidungsteil (112) im Wesentlichen röhrenförmig sind, wobei das äußere Glied mindestens einen länglichen Schlitz entlang seiner Länge mindestens in dem Bereich, der durch den Klemmmechanismus (116) festgeklemmt ist, aufweist, wobei der effektive Durchmesser des äußeren Glieds bei Festklemmen zum Ergreifen des inneren Glieds reduziert wird.

14. Befestigungshalter (118), der im Gebrauch in seiner Position bezüglich eines Fahrzeugteils befestigt ist, wobei der Befestigungshalter (118) einen Hauptkörperteil (120) mit zwei Halterungsarmen (122), die nach unten hängen und sich von dem Hauptkörperteil (120) weg erstrecken, um eine U-Form zu bilden, umfasst, wobei die Arme (122) einen Teil der Lenksäulenverkleidung (102) umgreifen,
**dadurch gekennzeichnet, dass** der Befestigungshalter (118) in Bereichen, in denen im Falle eines Zusammenstoßes, bei dem eine Last axial an die Lenksäulenverkleidung (102) angelegt wird, die größten Kräfte von dem Befestigungshalter getragen werden, mit einer oder mehreren Versteifungsrippen (170) versehen ist, wobei sich eine Versteifungsrippe (170) in einem Winkel von zwischen 10 Grad und 40 Grad einer normal zu der Hauptachse der Lenkwelle (104) verlaufenden Linie diagonal über den Hauptkörperteil (120) des Befestigungshalters (118) erstreckt.

## Revendications

1. Ensemble de colonne de direction (100), comprenant :
une enveloppe de colonne de direction (102) qui entoure un arbre de direction (104) pour une roue motrice ;
une console de fixation (118) qui est fixée en position par rapport à une partie de véhicule ; et
un mécanisme de serrage (116) qui peut être déplacé entre une position serrée dans laquelle le mécanisme de serrage (116) fixe l'enveloppe de colonne de direction (102) en position par rapport à la console de fixation (118), et une position libérée dans laquelle le mécanisme de serrage (116) permet le mouvement de l'enveloppe (102) par rapport à la console de fixation (118) ;
la console de fixation (118) comprenant une portion de corps principale (120) avec deux bras de console (122) descendant depuis la portion de corps principale (120) et s'étendant à l'écart de celle-ci pour former une forme en U, les bras (122) enveloppant une portion de l'enveloppe de colonne de direction (102), et le mécanisme de serrage (116), lorsqu'il est dans la position serrée, comprimant ensemble les deux bras (122) en serrant ainsi l'enveloppe de colonne de direction (102) en position ;
**caractérisé en ce que** la console de fixation (118) est pourvue d'une ou de plusieurs nervures de rigidification (170) dans les zones dans lesquelles les forces les plus intenses sont supportées par la console de fixation (118) en cas de collision dans laquelle une charge est appliquée axialement à l'enveloppe de colonne de direction (102), une nervure de rigidification (170) s'étendant en diagonale en travers de la portion de corps principale (120) de la console de fixation (118) suivant un angle compris entre 10 degrés et 40 degrés d'une ligne perpendiculaire à l'axe principal de l'arbre de direction (104).

2. Ensemble de colonne de direction (100) selon la revendication 1, dans lequel l'un des bras (122) est fixé à l'enveloppe de colonne de direction (102) par un mécanisme à verrouillage positif lorsque le mécanisme de serrage (116) est serré, et l'autre bras est fixé à l'enveloppe de colonne de direction (102) seulement par friction, de telle sorte qu'en cas de collision dans laquelle une charge est appliquée axialement à l'enveloppe de colonne de direction (102), les forces supportées par les deux bras (122) ne soient pas égales et que les forces appliquées au corps principal soient asymétriques, la ou les nervures de rigidification (170) étant agencées suivant un motif asymétrique déterminé par la répartition des forces, facultativement le mécanisme à verrouillage positif comprenant au moins une crémaillère (166) prévue sur le bras (122), laquelle vient en prise avec une crémaillère correspondante (166) du mécanisme de serrage (116) lorsque le mécanisme de serrage (116) est dans la position serrée.

3. Ensemble de colonne de direction (100) selon l'une quelconque des revendications précédentes, dans lequel la console de fixation (118) comprend au moins une plaque qui est recourbée pour former la console de fixation (118), et chaque nervure de rigidification (170) comprend une région de la plaque qui est recourbée hors du plan de la plaque pour former soit un bombement allongé soit une indentation allongée dans la plaque, facultativement l'au moins une plaque étant formée en pressant ou en estampant ou en laminant ou en manipulant d'une autre manière la plaque de manière à la déformer de façon permanente hors de son plan initial, en outre facultativement la ou chaque plaque comprenant une plaque en acier ou en un autre métal ou alliage métallique, en outre facultativement chaque nervure de rigidification (170) comprenant une région gaufrée de la plaque qui est en relief par rapport à une région environnante.

4. Ensemble de colonne de direction (100) selon l'une quelconque des revendications précédentes, dans lequel une nervure de rigidification (170) s'étend en travers de la portion de corps principale (120) d'un côté à l'autre au niveau d'une ligne perpendiculaire à l'axe principal de l'arbre de direction (104).

5. Ensemble de colonne de direction (100) selon l'une quelconque des revendications précédentes, dans lequel la console de fixation (118) comprend en outre une paire d'ailes (124), chacune s'étendant horizontalement à l'écart de l'axe central de la portion de corps principale (120), chaque aile (124) se terminant par une corne (126) qui s'étend dans une direction qui est sensiblement parallèle à l'axe principal de l'arbre de direction (104), facultativement chaque aile (124) étant fixée à une portion rigide d'une caisse de véhicule pendant l'utilisation, telle qu'un traverse, par un connecteur frangible respectif (132) agencé de telle sorte qu'en cas de collision dans laquelle le connecteur frangible (132) se rompt, la console de fixation (118) se déplace par rapport à la portion rigide du véhicule, chaque corne (126) glissant le long d'une partie d'un connecteur frangible respectif (132), en outre facultativement, chaque corne (126) comprenant une surface de guidage le long d'un bord qui s'ajuste à l'intérieur d'une fente de guidage (136) définie dans une portion du connecteur frangible (132) qui reste fixée à une portion fixe du véhicule, au cas où les connecteurs frangibles (132) se rompent.

6. Ensemble de colonne de direction (100) selon l'une quelconque des revendications précédentes, dans lequel la console de fixation (118) comprend deux plaques, une déformée pour fournir une couche inférieure de la portion de corps principale (120) et les deux bras (122), et l'autre déformée pour définir une couche supérieure de la portion de corps principale (120) et les deux ailes (124), facultativement des nervures de rigidification (170) étant prévues dans chaque plaque, facultativement en outre là où les deux plaques se chevauchent pour former la portion de corps principale (120), une nervure de rigidification (170) étant prévue dans une plaque, laquelle est en alignement avec une nervure correspondante (170) de forme complémentaire dans l'autre plaque.

7. Ensemble de colonne de direction (100) selon l'une quelconque des revendications précédentes, dans lequel des nervures de rigidification (170) sont prévues dans les ailes, les bras (122) et dans les cornes.

8. Ensemble de colonne de direction (100) selon l'une quelconque des revendications précédentes, dans lequel les nervures de rigidification (170) sont prévues suivant un motif qui optimise, ou optimise en partie, la résistance de la console de fixation (118) à la flexion lorsque celle-ci est soumise à une charge spécifique au cours d'une collision conduisant à un repliement télescopique de l'ensemble de colonne de direction (100).

9. Ensemble de colonne de direction (100) selon l'une quelconque des revendications précédentes, dans lequel la portion de corps principale (120) de la console de fixation (118) est située au-dessus d'une portion de l'ensemble de colonne de direction (100), facultativement dans lequel le mécanisme de serrage (116) est également situé au-dessus de la portion de l'ensemble de colonne de direction (100).

10. Ensemble de colonne de direction (100) selon l'une quelconque des revendications précédentes, dans lequel le mécanisme de serrage (116) comporte un boulon de serrage (144) qui relie un bras (122) de la console de fixation (118) à l'autre bras (122), facultativement dans lequel le boulon de serrage (144) comprend une tige, facultativement en outre dans lequel la tige est pourvue d'un écrou ou d'une tête de boulon (152) à une extrémité, la tige et l'écrou ou la tête de boulon (152) passant nettement à travers une ouverture dans chacun des panneaux.

11. Ensemble de colonne de direction (100) selon l'une quelconque des revendications précédentes, dans lequel le mécanisme de serrage (116) est agencé de telle sorte que lorsque le mécanisme de serrage (116) est dans la position déverrouillée, l'inclinaison de l'ensemble de colonne de direction (100) peut être ajustée tandis que les organes interne et externe restent fixes l'un par rapport à l'autre.

12. Ensemble de colonne de direction (100) selon l'une quelconque des revendications précédentes, dans lequel une portion d'enveloppe supérieure (110) ou un rail de fixation (148) fixé à l'une des portions, est pourvu(e) d'une ou de plusieurs fentes dans la région fixée par le mécanisme de serrage (116), de telle sorte que l'action de verrouillage du mécanisme de serrage (116) ferme les fentes et déforme ainsi l'organe externe de façon qu'il saisisse l'organe interne.

13. Ensemble de colonne de direction (100) selon l'une quelconque des revendications précédentes, dans lequel la portion d'enveloppe supérieure (110) et une portion d'enveloppe inférieure (112) sont sensiblement tubulaires, l'organe externe ayant au moins une fente allongée le long de sa longueur au moins dans la région serrée par le mécanisme de serrage (116), le diamètre effectif de l'organe externe étant ainsi réduit lors du serrage pour saisir l'organe interne.

14. Console de fixation (118) qui, pendant l'utilisation, est fixée en position par rapport à une pièce de véhicule, la console de fixation (118) comprenant une portion de corps principale (120) avec deux bras de console (122) descendant depuis la portion de corps principale (120) et s'étendant à l'écart de celle-ci pour former une forme en U, les bras (122) enveloppant une portion de l'enveloppe de colonne de direction (102), **caractérisée en ce que** la console de fixation (118) est pourvue d'une ou de plusieurs nervures de rigidification (170) dans les zones dans lesquelles les forces les plus intenses sont supportées par la console en cas de collision dans laquelle une charge est appliquée axialement à l'enveloppe de colonne de direction (102), une nervure de rigidification (170) s'étendant en diagonale en travers de la portion de corps principale (120) de la console de fixation (118) suivant un angle compris entre 10 degrés et 40 degrés d'une ligne perpendiculaire à l'axe principal d'un arbre de direction (104).
